# FASCICULE DE BREVET EUROPEEN

(11) **EP 2 386 923 B1**
(45) Date de publication et mention de la délivrance du brevet: **07.10.2015**
(21) Numéro de dépôt: 11163996.9
(22) Date de dépôt: 28.04.2011
(51) Int. Cl.: G05D 1/00

(54) **Procédé et dispositif pour la réduction des charges réelles engendrées sur un avion par une perturbation aérodynamique**
Method and device for reducing the real loads generated on an airplane by an aerodynamic disturbance
Verfahren und Vorrichtung zur Reduzierung der tatsächlichen Belastung, die auf ein Flugzeug bei einer aerodynamischen Perturbation einwirkt

(30) Priorité: 03.05.2010 FR 1053391
(43) Date de publication de la demande: 16.11.2011
(73) Titulaire: Airbus Opérations SAS, 31060 Toulouse (FR)
(72) Inventeur: Blanc, Sébastien, 31880 La Salvetat Saint Gilles (FR); Humbert, Marc, 31170 Tournefeuille (FR)
(74) Mandataire: Gevers France

(56) Documents cités:
- EP-A1- 0 435 764
- EP-A2- 0 953 503
- FR-A1- 2 891 802
- FR-A1- 2 912 991
- FR-A1- 2 927 428

## Description

La présente invention concerne un procédé et un dispositif pour la réduction des charges réelles engendrées sur un avion par une perturbation aérodynamique, notamment due au vent, ainsi qu'un avion équipé d'un tel dispositif.

On sait que, dans le cadre d'une certification des avions de transport en ce qui concerne les charges qui leurs sont appliquées, il faut considérer plusieurs cas de dimensionnement réglementaires liés respectivement à :
- une manoeuvre ;
- une rafale discrète ; et
- une turbulence continue.

Les deux derniers cas de charges sont parfois plus dimensionnants que les cas de charges liés à une manoeuvre. Il est donc avantageux de pouvoir réduire les niveaux de charges associés à une rafale discrète et à une turbulence continue, ce qui permet notamment de réaliser un gain sur la masse structurale de la voilure de l'avion.

Par la demande de brevet français FR-2912991, on connaît déjà un procédé et un dispositif destinés à la réduction dynamique des charges engendrées sur un avion de transport par une perturbation aérodynamique, notamment due au vent (rafale discrète, turbulence continue, etc.). Ce dispositif assure un contrôle dynamique des charges engendrées sur la voilure de l'avion par une mesure d'incidence à l'aide d'une sonde d'incidence. Lorsque l'angle d'incidence de l'avion mesuré est supérieur à un seuil prédéterminé, le dispositif détecte une perturbation aérodynamique et détermine des ordres de braquage des ailerons de l'avion, afin d'incliner ceux-ci d'un angle de braquage particulier et cela à une vitesse de braquage maximale.

Un tel dispositif permet ainsi de détecter de façon précise et fiable une perturbation aérodynamique, susceptible d'engendrer une augmentation des charges de la voilure de l'avion. En outre, le braquage des ailerons, déterminé directement sur la cause d'excitation de la structure de l'avion, est réalisé à une vitesse maximale, ce qui permet de limiter la flexion des ailes causée par la perturbation et permet de réduire, de façon dynamique, le niveau de charges existant au niveau de la voilure.

Grâce à une telle réduction dynamique des charges, on est notamment en mesure d'obtenir un gain sur la masse structurale de la voilure de l'avion.

Par ailleurs, par la demande de brevet européen EP-0953503, on connaît un braquage préventif de surfaces de contrôle. Ce braquage préventif est mis en oeuvre lors de la phase de montée de l'aéronef jusqu'à son altitude de croisière et lors de la phase de descente depuis cette dernière altitude, l'amplitude du braquage dépendant de l'altitude, de la vitesse et de la masse de l'aéronef.

En outre, par la demande de brevet français FR-2891802, on connaît un braquage de surfaces de contrôle dédiées. Ce braquage est déclenché lorsque l'incidence réelle courante d'un aéronef est supérieure à un seuil courant d'incidence fonction de la masse, de la vitesse et de l'altitude courantes de l'aéronef. Ce seuil courant est obtenu à partir de tables, préalablement déterminées, regroupant des seuils d'incidence, pour des masses, des vitesses et des altitudes données, pour lesquels l'accélération verticale correspondante de l'aéronef excède une valeur particulière critique.

La présente invention a pour objet de réduire la masse structurale de la voilure d'un avion et, en particulier, de la réduire davantage lorsque l'avion est équipé d'un dispositif de réduction dynamique des charges, par exemple du type décrit ci-dessus.

A cette fin, elle concerne un procédé de réduction des charges réelles engendrées sur un avion par une perturbation aérodynamique, notamment due au vent, ledit avion comportant des surfaces de contrôle agencées sur ses ailes. Selon l'invention, ledit procédé est tel que :
A/ dans une étape préliminaire, on détermine un domaine de dépassement de charges, défini par des couples de valeurs d'altitude et de vitesse accessibles audit avion, pour lequel les charges réelles appliquées sur ledit avion sont susceptibles d'être au moins égales à un seuil de charges prédéfini qui est égal à un pourcentage prédéterminé des charges réelles de dimensionnement des ailes dudit avion, en effectuant de façon automatique les étapes successives suivantes :
   a) on sélectionne au moins un paramètre de l'avion dont la valeur est susceptible d'évoluer au cours d'un vol dudit avion ;
   b) pour au moins une valeur donnée dudit paramètre sélectionné, on détermine des charges théoriques exercées sur l'avion pour tous les couples d'un domaine de vol auxquels sont respectivement associées des perturbations théoriques aérodynamiques d'intensité donnée, ledit domaine de vol de l'avion étant défini par des couples de valeurs d'altitude et de vitesse accessibles audit avion ; et
   c) pour chaque couple dudit domaine de vol associé à une perturbation théorique d'intensité donnée, on compare lesdites charges théoriques déterminées, associées audit couple, au seuil de charges prédéfini, de sorte que ledit domaine de dépassement de charges est déterminé par l'ensemble des couples dudit domaine de vol pour lesquels lesdites charges théoriques déterminées associées sont au moins égales audit seuil de charges ;
B/ lors d'un vol de l'avion, on effectue de façon répétitive et automatique les étapes suivantes :
   i) on réalise une surveillance de l'altitude et de la vitesse courantes dudit avion pour détecter si ce dernier se trouve dans ledit domaine de dépassement de charges ;
   ii) lorsque ledit avion se trouve dans ledit domaine de dépassement de charges, on détermine des ordres de braquage d'au moins certaines desdites surfaces de contrôle pour réduire les charges réelles appliquées sur ledit avion, ces ordres de braquage étant tels qu'ils engendrent un braquage desdites surfaces de contrôle respectivement selon un angle de braquage particulier ; et
   iii) on applique les ordres de braquage ainsi déterminés auxdites surfaces de contrôle.

Ainsi, grâce à la présente invention, on réalise, au cours d'un vol, un braquage préventif statique d'au moins certaines des surfaces de contrôle d'un avion, dès que celui-ci entre dans le domaine de dépassement de charges déterminé théoriquement, par exemple par des simulations numériques et/ou des expérimentations. De cette façon, l'avion est protégé des éventuelles perturbations aérodynamiques réelles qu'il pourrait rencontrer ultérieurement au cours du vol, la configuration « protégée » de l'avion lui permettant de réduire les charges engendrées, notamment sur sa voilure, lors de telles perturbations.

Autrement dit, dans la présente invention, on anticipe une éventuelle perturbation aérodynamique en braquant, de façon préventive, des surfaces de contrôle d'un avion. En agissant de la sorte, la voilure de l'avion peut subir une augmentation de charges sans risque de dépasser les charges limites de dimensionnement de la structure de l'avion (c'est-à-dire les charges maximales que peuvent supporter les parties de structure prises en compte (à savoir la voilure) sans apparition de déformations permanentes).

On notera que, dans la demande de brevet français FR-2912991, le braquage des surfaces de contrôle est réalisé sur la détection, par des capteurs, d'une perturbation aérodynamique. Au contraire, dans la présente invention, on braque préventivement les surfaces de contrôle avant l'apparition éventuelle de perturbations aérodynamiques.

Grâce à cette réduction des charges, on est notamment en mesure d'obtenir un gain sur la masse structurale de la voilure d'un avion, ce qui permet en particulier de réduire le coût de fabrication et de fonctionnement dudit avion. En outre, la présente invention peut être mise en oeuvre dans tout avion et, en particulier, dans tout avion de transport pourvu d'un ou plusieurs dispositifs de réduction de charges usuels (par exemple du type décrit dans la demande de brevet français FR-2912991), de manière à réduire davantage la masse structurale de la voilure de l'avion.

Dans le cadre de la présente invention, on considère qu'une perturbation aérodynamique peut être :
- une rafale discrète, c'est-à-dire une modélisation du vent simplifiée visant à représenter une turbulence isolée d'une intensité extrême ; ou
- une turbulence continue, c'est-à-dire une modélisation du vent visant à représenter des perturbations atmosphériques qui durent longtemps et qui peuvent exciter les modes structuraux de l'avion peu amortis ; ou
- un trou d'air ; ou
- d'autres types de turbulences.

Par ailleurs, pour une valeur donnée d'un ou plusieurs paramètres de l'avion, on détermine un ensemble de couples de valeurs d'altitude et de vitesse (qui correspond au domaine de dépassement de charges) pour lesquels les charges réelles engendrées sur l'avion sont susceptibles d'être supérieures à un seuil de charges. De cette façon, au cours d'un vol, lorsque le couple courant de l'avion correspond à un des couples du domaine de dépassement de charges, les surfaces de contrôle de l'avion sont braquées préventivement pour éviter toutes surcharges sur les ailes de l'avion.

En outre, ledit paramètre de l'avion sélectionné peut appartenir au groupe suivant des paramètres de l'avion :
- la masse dudit avion ;
- le niveau de remplissage des réservoirs dudit avion ;
- le centrage dudit avion.

Dans un mode de réalisation particulier de la présente invention :
- on répète l'étape b) pour une pluralité de valeurs données dudit paramètre sélectionné ; et
- lors de l'étape c), pour chacune desdites valeurs données du paramètre sélectionné et pour chaque couple dudit domaine de vol, on compare lesdites charges théoriques déterminées, associées audit couple, au seuil de charges prédéfini, de sorte que l'on obtient, pour chacune desdites valeurs du paramètre sélectionné, un tel domaine de dépassement de charges déterminé par l'ensemble des couples dudit domaine de vol dont lesdites charges théoriques déterminées associées sont au moins égales audit seuil de charges ; et
- on sélectionne, en fonction d'un critère de performance de l'avion, un domaine de dépassement de charges optimum parmi lesdits domaines de dépassement de charges déterminés. Le critère de performance peut, par exemple, être tel que le domaine de dépassement de charges optimum n'interagit pas, ou très peu, avec le domaine opérationnel de l'avion (qui correspond aux couples de valeurs du domaine de vol Dv usuellement respectés par l'avion).

Ainsi, la pluralité de valeurs du paramètre de l'avion sélectionné peut correspondre aux différents valeurs prises par ce paramètre au cours d'un vol. En établissant un domaine de dépassement de charges pour chacune des valeurs du paramètre sélectionné, il est possible de déterminer un domaine de dépassement de charges optimum, qui satisfait le mieux audit critère de performance de l'avion.

Dans un mode de réalisation préféré de la présente invention :
- lesdites surfaces de contrôle sont des volets hypersustentateurs qui sont agencés sur la partie interne des ailes dudit avion ; et
- lors de l'étape iii), lesdits volets sont braqués vers le bas de façon symétrique par rapport à l'axe longitudinal de l'avion.

Ainsi, on peut gérer le centre de portance le long de la voilure de l'avion en modifiant la répartition de portance autour d'une configuration optimisée de l'avion, par l'intermédiaire d'un braquage des volets intérieurs. En braquant les volets vers le bas, on charge principalement la voilure au niveau de l'emplanture des ailes.

Dans une variante du mode de réalisation préféré :
- lesdites surfaces de contrôle comprennent :
   ▪ des volets intérieurs qui sont agencés sur la partie interne des ailes dudit avion ; et
   ▪ des volets extérieurs qui sont agencés sur la partie externe des ailes dudit avion ;
- et, lors de l'étape iii) :
   ▪ lesdits volets intérieurs et lesdits volets extérieurs sont braqués de façon indépendante ; et
   ▪ lesdits volets intérieurs et lesdits volets extérieurs sont braqués respectivement de façon symétrique par rapport à l'axe longitudinal de l'avion.

Ainsi, on peut accentuer le déplacement du centre de portance vers l'emplanture des ailes en braquant les volets intérieurs vers le bas et, éventuellement, les volets extérieurs légèrement vers le haut.

Avantageusement, lesdites surfaces de contrôle peuvent être maintenues braquées au moins pendant une temporisation prédéfinie, de manière à éviter une activité trop intense des surfaces de contrôle.

De plus, la présente invention concerne un dispositif de réduction des charges réelles engendrées sur un avion par une perturbation aérodynamique, ledit avion comportant des surfaces de contrôle agencées sur ses ailes. Selon l'invention, ledit dispositif est remarquable en ce qu'il comporte :
- des moyens pour déterminer un domaine de dépassement de charges défini par des couples de valeurs d'altitude et de vitesse accessibles audit avion, pour lequel les charges réelles appliquées sur ledit avion sont susceptibles d'être au moins égales à un seuil de charges prédéfini qui est égal à un pourcentage prédéterminé des charges réelles de dimensionnement des ailes, en effectuant de façon automatique les étapes successives suivantes :
   - sélectionner au moins un paramètre de l'avion dont la valeur est susceptible d'évoluer au cours d'un vol dudit avion ;
   - pour au moins une valeur donnée dudit paramètre sélectionné, déterminer des charges théoriques exercées sur l'avion pour tous les couples d'un domaine de vol auxquels sont respectivement associées des perturbations théoriques aérodynamiques d'intensité donnée, ledit domaine de vol de l'avion étant défini par des couples de valeurs d'altitude et de vitesse accessibles audit avion ; et
   - pour chaque couple dudit domaine de vol associé à une perturbation théorique d'intensité donnée, comparer lesdites charges théoriques déterminées, associées audit couple, au seuil de charges prédéfini, de sorte que ledit domaine de dépassement de charges est déterminé par l'ensemble des couples dudit domaine de vol pour lesquels lesdites charges théoriques déterminées associées sont au moins égales audit seuil de charges ; et
- les moyens suivants qui mettent en oeuvre de façon répétitive les opérations correspondantes :
   ▪ des moyens pour réaliser une surveillance permettant de détecter que ledit avion se trouve dans ledit domaine de dépassement de charges ;
   ▪ des moyens pour déterminer, lorsque ledit avion se trouve dans ledit domaine de dépassement de charges, des ordres de braquage d'au moins certaines desdites surfaces de contrôle pour réduire les charges appliquées sur ledit avion, ces ordres de braquage étant tels qu'ils engendrent un braquage desdites surfaces de contrôle respectivement selon un angle de braquage particulier ; et
   ▪ des moyens pour appliquer lesdits ordres de braquage auxdites surfaces de contrôle.

La présente invention concerne également un avion comportant un dispositif tel que celui décrit ci-dessus.

Les figures du dessin annexé feront bien comprendre comment l'invention peut être réalisée. Sur ces figures, des références identiques désignent des éléments semblables.

La figure 1 présente un schéma synoptique d'un dispositif de réduction des charges, conforme à la présente invention, monté à bord d'un avion civil gros porteur.

La figure 2 est un diagramme illustrant un exemple de domaine de dépassement de charges optimum déterminé par le dispositif de la figure 1.

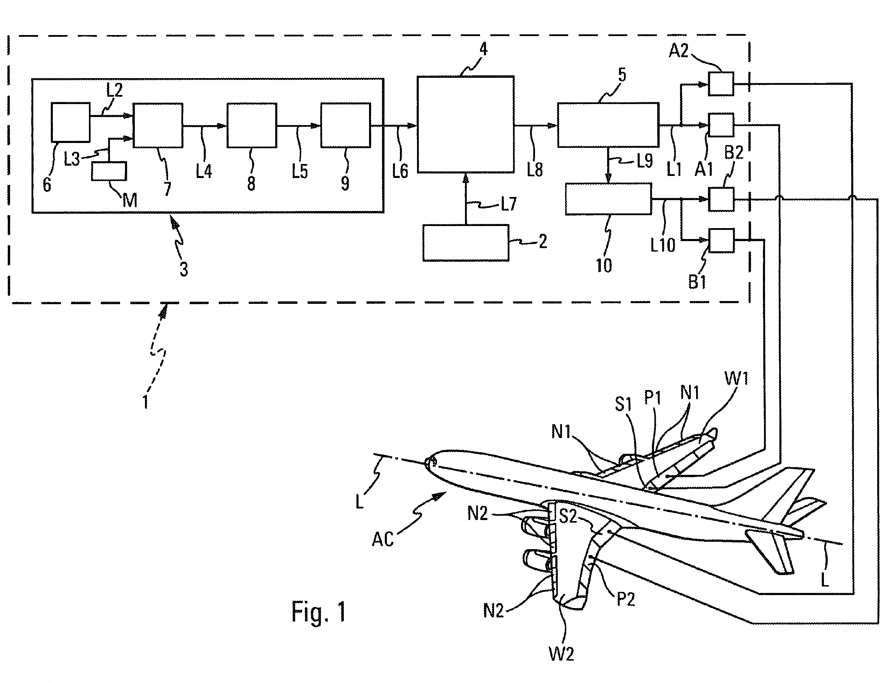

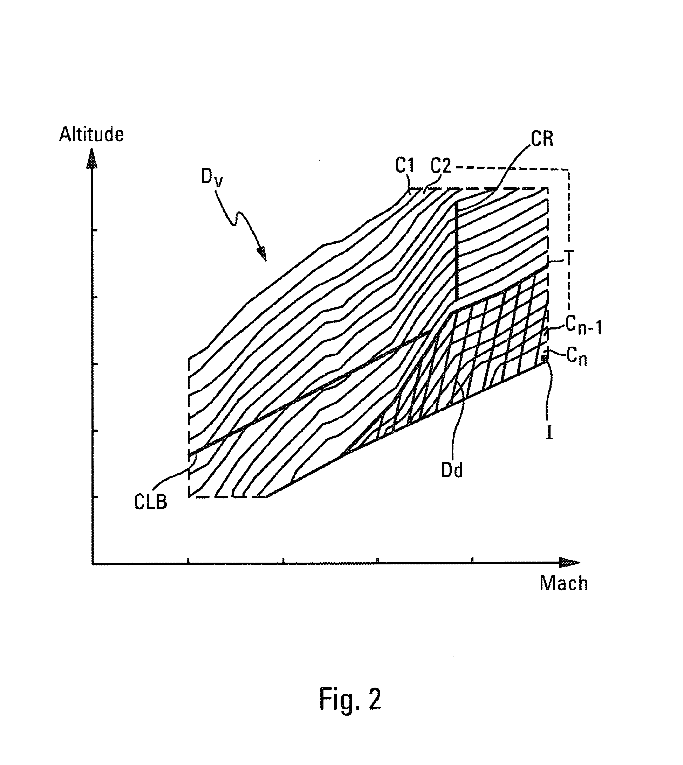

Le dispositif 1, conforme à l'invention et représenté schématiquement sur la figure 1, est destiné à réduire les charges réelles exercées notamment sur les ailes W1 et W2 d'un avion AC (par exemple un avion de transport tel qu'illustré sur la figure 2), charges qui sont engendrées par une perturbation aérodynamique. Dans le cadre de la présente invention, on considère qu'une perturbation aérodynamique peut être :
- une rafale discrète, c'est-à-dire une modélisation du vent simplifiée visant à représenter une turbulence isolée d'une intensité extrême ; ou
- une turbulence continue, c'est-à-dire une modélisation du vent visant à représenter des perturbations atmosphériques qui durent longtemps et qui peuvent exciter les modes structuraux de l'avion peu amortis ; ou
- un trou d'air ; ou
- d'autres types de turbulences.

Pour des raisons de clarté, le dispositif 1 de l'invention est représenté extérieur à l'avion AC, alors qu'il est en réalité monté à bord de ce dernier. On notera toutefois que, en variante, au moins certains des moyens décrits ci-après du dispositif 1 pourraient ne pas être embarqués à bord de l'avion AC.

Comme le montre la figure 1, le dispositif 1 de l'invention comporte :
- un ensemble 2 de sources d'informations qui sont susceptibles de mesurer, de façon usuelle, les valeurs de paramètres de l'avion (tels que la vitesse, l'altitude, la masse, etc.) ;
- des moyens 3 pour déterminer un domaine de dépassement de charges Dd optimum (voir la figure 2), pour lequel les charges réelles appliquées sur ledit avion AC sont susceptibles d'être au moins égales à un seuil de charges T prédéfini critique (figure 2). Ce seuil de charges T peut être pris égal à un pourcentage donné (par exemple 92%) des charges de dimensionnement de l'avion AC. Par charges de dimensionnement, on entend les charges maximales que peuvent supporter les parties de structure prises en compte (à savoir la voilure de l'avion AC) sans apparition de déformations permanentes ;
- des moyens 4 pour réaliser une surveillance permettant de détecter que l'avion AC se trouve dans le domaine de dépassement de charges Dd optimum déterminé par les moyens 3 ;
- des moyens 5 pour déterminer, lorsque l'avion AC se trouve dans le domaine de dépassement de charges Dd optimum, des ordres de braquage précisés ci-après de surfaces de contrôle S1 et S2 de l'avion AC. Ces surfaces de contrôle S1 et S2 sont agencées sur les ailes dudit avion AC. Selon l'invention, lesdits ordres de braquage sont tels qu'ils engendrent un braquage préventif desdites surfaces de contrôle S1 et S2 vers le bas pour contrecarrer les effets d'une éventuelle perturbation réelle aérodynamique ; et
- des moyens d'actionnement usuels A1 et A2. Chacun de ces moyens d'actionnement A1, A2 est associé à l'une desdites surfaces de contrôle S1, S2. Ces moyens d'actionnement A1 et A2 reçoivent les ordres de braquage déterminés par lesdits moyens 5 (par une liaison L1) et engendrent un angle de braquage pour chacune desdites surfaces de contrôle S1 et S2.

Ainsi, le dispositif 1 conforme à l'invention est en mesure de commander, au cours d'un vol, un braquage préventif statique des surfaces de contrôle S1 et S2, dès que celui-ci rentre dans le domaine de dépassement de charges déterminé théoriquement, dans lequel il est susceptible de rencontrer des perturbations aérodynamiques, telle qu'une rafale discrète ou une turbulence continue par exemple, qui peut engendrer une augmentation des charges sur la voilure (les ailes W1, W2) de l'avion AC.

Grâce à la réduction des charges sur la voilure dans le domaine de dépassement de charges, on est en mesure d'obtenir un gain sur la masse structurale de la voilure de l'avion AC, ce qui permet en particulier de réduire le coût de fabrication et de fonctionnement dudit avion.

Dans le cadre de la présente invention, on entend par domaine de vol Dv (voir la figure 2), un ensemble de couples de valeurs de vitesse et d'altitude qui sont théoriquement accessibles à l'avion AC au cours d'un vol. Ce domaine de vol Dv est par exemple sauvegardé dans des moyens de stockage M appartenant aux moyens 3.

Selon l'invention, les moyens de détermination 3 d'un domaine de dépassement de charges Dd optimum comportent :
- des moyens 6 pour sélectionner, automatiquement ou manuellement par les pilotes par l'intermédiaire d'une interface dédiée, un paramètre de l'avion AC dont la valeur est susceptible d'évoluer au cours d'un vol de celui-ci. Un tel paramètre peut être sélectionné parmi les paramètres suivants de l'avion AC :
   ■ la masse ;
   ■ le niveau de remplissage des réservoirs ;
   ■ le centrage.
   Bien entendu, on pourrait envisager tout autre type de paramètres existants appropriés. Il est également possible d'effectuer simultanément une sélection de plusieurs paramètres de l'avion AC ;
- des moyens 7 pour déterminer, pour une pluralité de valeurs données du paramètre sélectionné (reçues des moyens 6 par une liaison L2), les charges théoriques C1 à Cn (n entier, figure2) exercées sur l'avion AC pour chacun des couples du domaine de vol Dv auxquels sont associées respectivement des perturbations théoriques aérodynamiques d'intensité prédéfinie (provenant par exemple d'une modélisation prédéfinie). Les moyens 7, reliés aux moyens 6 et aux moyens M par l'intermédiaire respectivement des liaisons L2 et L3, sont aptes à recevoir la pluralité de valeurs du paramètre sélectionné et des informations concernant le domaine de vol Dv. On notera que l'intensité d'une perturbation théorique associée à un couple du domaine de vol Dv peut être fonction de l'altitude de ce couple. Par ailleurs, en variante, on pourrait déterminer, pour chacun des couples du domaine de vol Dv, les charges théoriques exercées sur l'avion AC pour une seule et unique valeur du paramètre sélectionné ; et
- des moyens 8 qui sont formés pour comparer, pour chacune des valeurs du paramètre sélectionné de l'avion AC, les charges théoriques déterminées C1 à Cn, associées respectivement à chacun des couples du domaine de vol DV, au seuil de charges prédéfini T. Les moyens 8 sont aptes à recevoir les charges théoriques déterminées C1 à Cn par les moyens 7, par l'intermédiaire d'une liaison L4. Ainsi, on obtient, pour chacune desdites valeurs du paramètre sélectionné, un domaine de dépassement de charges Dd qui est déterminé par l'ensemble des couples du domaine de vol dont les charges théoriques associées C1 à Cn sont au moins égales au seuil de charges prédéfini T. Autrement dit, en sortie des moyens 8, on obtient une pluralité de domaines de dépassement de charges Dd ; et
- des moyens 9 pour sélectionner, en fonction d'un critère de performance de l'avion AC, le domaine de dépassement de charges Dd optimum parmi la pluralité de domaines de dépassement de charges déterminés par les moyens 8 et reçus par une liaison L5. Le critère de performance peut être tel que le domaine de dépassement de charges Dd optimum n'interagit pas, ou très peu, avec le domaine opérationnel de l'avion AC (qui correspond aux couples de valeurs du domaine de vol Dv usuellement suivis par l'avion) symbolisé par les droites de montée CLB et de croisière CR de la figure 2. Ce critère de performance représente donc un compromis entre la réduction des charges engendrées sur la voilure de l'avion AC et les performances de celui-ci.

Il est à noter que l'on pourrait envisager, en variante ou en complément, d'actualiser le domaine de dépassement de charges optimum au cours du vol en fonction de l'évolution d'un ou de plusieurs paramètres de l'avion (par exemple la masse).

A partir du domaine de dépassement de charges Dd optimum, déterminé par les moyens 3 et reçu par une liaison L6, et du couple courant de valeurs de vitesse et d'altitude de l'avion AC reçues de l'ensemble 2 par une liaison L7, les moyens de surveillance 4 vérifient si le couple courant de valeurs correspond à un des couples du domaine de dépassement de charges Dd optimum. En cas de vérification positive (le couple courant est un des couples qui appartient au domaine de dépassement de charges Dd optimum), les moyens de surveillance 4 émettent en sortie, par l'intermédiaire d'une liaison L8, un signal représentatif des charges théoriques déterminées associées au couple courant, à destination des moyens 5.

Lorsqu'ils reçoivent un tel signal, les moyens 5 déterminent des ordres de braquage des surfaces de contrôle S1 et S2 en utilisant les charges théoriques déterminées par les moyens 7 et associées audit couple courant. Lesdits ordres de braquage sont, par exemple, obtenus au moyen d'une table de correspondance (non représentée) qui associe, à des charges de référence données, un angle de braquage particulier à appliquer aux surfaces de contrôle S1 et S2. La table de correspondance peut être sauvegardée dans les moyens 5. Ainsi, en identifiant les charges théoriques associées au couple courant dans la table de correspondance, on peut déterminer l'angle de braquage particulier à appliquer aux surfaces de contrôle S1 et S2.

Les ordres de braquage ainsi engendrés par lesdits moyens 5 sont transmis aux actionneurs A1 et A2 qui les appliquent ensuite auxdites surfaces de contrôle S1 et S2. De cette façon, ces surfaces de contrôle S1 et S2 sont braquées vers le bas de façon symétrique par rapport à l'axe longitudinal L-L de l'avion AC.

Les surfaces de contrôle S1 et S2 sont de préférence braquées par pas angulaires successifs, pour atteindre l'angle particulier requis par les ordres de braquage.

En outre, elles peuvent être maintenues dans cette position pendant une temporisation prédéterminée pour éviter trop de va-et-vient, de manière à ne pas fatiguer les actionneurs A1 et A2 correspondants.

Dans un mode de réalisation préféré de la présente invention, les surfaces de contrôle S1 et S2 sont des volets de bord de fuite hypersustentateurs intérieurs, qui sont agencés sur la partie interne des ailes W1 et W2 de l'avion AC.

Il est en outre possible de désactiver le dispositif 1 de l'invention lorsque la masse de l'avion AC est au plus égale à la masse maximale de décollage de l'avion AC à laquelle on a soustrait une masse constante prédéterminée, par exemple égale à 30 tonnes (soit *Mavion* ≤ *M* max-30*t*).

Par ailleurs, dans une variante du mode de réalisation préféré, le dispositif 1 comporte de plus :
- des moyens 10 qui sont reliés aux moyens 5, par l'intermédiaire respectivement d'une liaison L9, et qui sont destinés à déterminer des ordres de braquage auxiliaires pour des surfaces de contrôle auxiliaires P1 et P2 de l'avion AC, également agencées sur les ailes W1 et W2 de celui-ci. Ces surfaces de contrôle auxiliaires P1 et P2 sont braquées de façon symétrique par rapport à l'axe longitudinal L-L de l'avion AC. Lesdits ordres de braquage auxiliaires sont par exemple déterminés en utilisant les ordres de braquage obtenus par les moyens 5 ; et
- des moyens d'actionnement usuels B1 et B2 qui sont reliés par l'intermédiaire d'une liaison L10 auxdits moyens 10 et qui sont susceptibles d'amener les surfaces de contrôle auxiliaires P1 et P2 dans une position représentative des ordres de braquage auxiliaires déterminés par les moyens 10.

Dans cette variante, les surfaces de contrôle P1 et P2 sont de préférence des volets hypersustentateurs extérieurs de bord de fuite, qui sont agencés sur la partie externe des ailes W1 et W2 de l'avion AC. Ils peuvent être braqués de façon indépendante des volets extérieurs intérieurs S1 et S2, de sorte que l'angle de braquage appliqués aux volets intérieurs S1 et S2 et celui appliqué aux volets extérieurs P1 et P2 peuvent être soit identiques, soit différents. En outre, les volets intérieurs S1, S2 peuvent être braqués dans un sens opposé au sens de braquage des volets extérieurs P1, P2.

Par ailleurs, dans une autre variante, on pourrait envisager que les surfaces de contrôle auxiliaires soient des becs de bord d'attaque N1 et N2 agencés sur les ailes de l'avion AC et utilisés comme surfaces d'hypersustentation.

Dans l'exemple de la figure 2, le domaine de vol Dv est représenté par un diagramme de la vitesse Mach de l'avion AC en fonction de son altitude.

Tel qu'indiqué précédemment, la droite de montée CLB et la droite de croisière CR délimitent le domaine de vol opérationnel de l'avion AC formés des couples de valeurs de vitesse et d'altitude du domaine de vol Dv généralement suivis par l'avion AC au cours d'un vol.

En outre, on a représenté, sur le domaine de vol Dv, les charges théoriques C1 à Cn déterminées par les moyens 7 pour une valeur donnée du paramètre de l'avion AC (dans cet exemple la masse) sélectionné par les moyens 6.

Comme le montre figure 2, les charges théoriques engendrées sur l'avion AC peuvent être identiques pour différents couples du domaine de vol Dv (ce qui est symbolisé par les zones d'iso-charge C1 à Cn).

De plus, le domaine de dépassement de charges Dd (zone hachurée sur la figure 2) correspond à l'ensemble des couples de valeurs du domaine de vol Dv pour lequel les charges théoriques associées sont au moins égales au seuil de charges T (par exemple égale à 92% des charges réelles maximales que peut supporter la structure de l'avion AC, obtenues sur le point critique 1).

Dans cet exemple, il n'y a pas d'interaction entre le domaine de vol opérationnel CR et CLB de l'avion AC et le domaine de dépassement de charges Dd déterminé (ces deux domaines sont décorrélés), de sorte que ce dernier peut être considéré comme optimum.

## Revendications

1. Procédé de réduction des charges réelles engendrées sur un avion (AC) par une perturbation aérodynamique, ledit avion (AC) comportant des surfaces de contrôle (S1, S2, P1, P2) agencées sur ses ailes (W1, W2), procédé selon lequel :
A/ dans une étape préliminaire, on détermine un domaine de dépassement de charges (Dd), défini par des couples de valeurs d'altitude et de vitesse accessibles audit avion (AC), pour lequel les charges réelles appliquées sur ledit avion (AC) sont susceptibles d'être au moins égales à un seuil de charges (T) prédéfini qui est égal à un pourcentage prédéterminé des charges réelles de dimensionnement des ailes (W1, W2) dudit avion (AC), en effectuant de façon automatique les étapes successives suivantes :
a) on sélectionne au moins un paramètre de l'avion (AC) dont la valeur est susceptible d'évoluer au cours d'un vol dudit avion (AC) ;
b) pour au moins une valeur donnée dudit paramètre sélectionné, on détermine des charges théoriques (C1 à Cn) exercées sur l'avion (AC) pour tous les couples d'un domaine de vol (Dv) auxquels sont respectivement associées des perturbations théoriques aérodynamiques d'intensité donnée, ledit domaine de vol (Dv) de l'avion (AC) étant défini par des couples de valeurs d'altitude et de vitesse accessibles audit avion (AC) ; et
c) pour chaque couple dudit domaine de vol (Dv) associé à une perturbation théorique d'intensité donnée, on compare lesdites charges théoriques déterminées (C1 à Cn), associées audit couple, au seuil de charges prédéfini (T), de sorte que ledit domaine de dépassement de charges (Dd) est déterminé par l'ensemble des couples dudit domaine de vol (Dv) pour lesquels lesdites charges théoriques déterminées (C1 à Cn) associées sont au moins égales audit seuil de charges (T) ;
B/ lors d'un vol de l'avion (AC), on effectue de façon répétitive et automatique les étapes suivantes :
i) on réalise une surveillance de l'altitude et de la vitesse courantes dudit avion (AC) pour détecter si ce dernier se trouve dans ledit domaine de dépassement de charges (Dd) ;
ii) lorsque ledit avion (AC) se trouve dans ledit domaine de dépassement de charges (Dd), on détermine des ordres de braquage d'au moins certaines desdites surfaces de contrôle (S1, S2, P1, P2) pour réduire les charges réelles appliquées sur ledit avion (AC), ces ordres de braquage étant tels qu'ils engendrent un braquage desdites surfaces de contrôle (S1, S2, P1, P2) respectivement selon un angle de braquage particulier ; et
iii) on applique les ordres de braquage ainsi déterminés auxdites surfaces de contrôle (S1, S2, P1, P2).

2. Procédé selon la revendication 1,
**caractérisé :**
- **en ce qu'**on répète l'étape b) pour une pluralité de valeurs données dudit paramètre sélectionné ; et
- **en ce que**, lors de l'étape c), pour chacune desdites valeurs données du paramètre sélectionné et pour chaque couple dudit domaine de vol (Dv), on compare lesdites charges théoriques déterminées (C1 à Cn), associées audit couple, au seuil de charges prédéfini (T), de sorte que l'on obtient, pour chacune desdites valeurs du paramètre sélectionné, un tel domaine de dépassement de charges (Dd) déterminé par l'ensemble des couples dudit domaine de vol (Dv) dont lesdites charges théoriques déterminées (C1 à Cn) associées sont au moins égales audit seuil de charges (T) ; et
- **en ce qu'**on sélectionne, en fonction d'un critère de performance de l'avion (AC), un domaine de dépassement de charges optimum parmi lesdits domaines de dépassement de charges (Dd) déterminés.

3. Procédé selon l'une des revendications 1 ou 2,
**caractérisé en ce que** ledit paramètre de l'avion (AC) sélectionné appartient au groupe suivant des paramètres de l'avion (AC) :
- la masse dudit avion (AC) ;
- le niveau de remplissage des réservoirs dudit avion (AC) ;
- le centrage dudit avion (AC).

4. Procédé selon l'une quelconque des revendications 1 à 3, **caractérisé :**
- **en ce que** lesdites surfaces de contrôle sont des volets hypersustentateurs (S1, S2) qui sont agencés sur la partie interne des ailes (W1, W2) dudit avion (AC) ; et
- **en ce que**, lors de l'étape iii), lesdits volets (S1, S2) sont braqués vers le bas de façon symétrique par rapport à l'axe longitudinal (L-L) de l'avion (AC).

5. Procédé selon l'une quelconque des revendications 1 à 3, **caractérisé :**
- **en ce que** lesdites surfaces de contrôle comprennent :
▪ des volets intérieurs (S1, S2) qui sont agencés sur la partie interne des ailes (W1, W2) dudit avion (AC) ; et
▪ des volets extérieurs (P1, P2) qui sont agencés sur la partie externe des ailes (W1, W2) dudit avion (AC) ;
- et **en ce que**, lors de l'étape iii) :
▪ lesdits volets intérieurs (S1, S2) et lesdits volets extérieurs (P1, P2) sont braqués de façon indépendante ; et
▪ lesdits volets intérieurs (S1, S2) et lesdits volets extérieurs (P1, P2) sont braqués respectivement de façon symétrique par rapport à l'axe longitudinal (L-L) de l'avion (AC).

6. Procédé selon l'une quelconque des revendications 1 à 5, **caractérisé en ce que** lesdites surfaces de contrôle (S1, S2, P1, P2) sont maintenues braquées au moins pendant une temporisation prédéfinie.

7. Dispositif de réduction des charges réelles engendrées sur un avion (AC) par une perturbation aérodynamique, ledit avion (AC) comportant des surfaces de contrôle (S1, S2, P1, P2) agencées sur ses ailes (W1, W2),
**caractérisé en ce qu'**il comporte :
- des moyens (3) pour déterminer un domaine de dépassement de charges (Dd) défini par des couples de valeurs d'altitude et de vitesse accessibles audit avion (AC), pour lequel les charges réelles appliquées sur ledit avion (AC) sont susceptibles d'être au moins égales à un seuil de charges prédéfini (T) qui est égal à un pourcentage prédéterminé des charges réelles de dimensionnement des ailes (W1, W2), en effectuant de façon automatique les étapes successives suivantes:
• sélectionner au moins un paramètre de l'avion (AC) dont la valeur est susceptible d'évoluer au cours d'un vol dudit avion (AC) ;
• pour au moins une valeur donnée dudit paramètre sélectionné, déterminer des charges théoriques (C1 à Cn) exercées sur l'avion (AC) pour tous les couples d'un domaine de vol (Dv) auxquels sont respectivement associées des perturbations théoriques aérodynamiques d'intensité donnée, ledit domaine de vol (Dv) de l'avion (AC) étant défini par des couples de valeurs d'altitude et de vitesse accessibles audit avion (AC) ; et
• pour chaque couple dudit domaine de vol (Dv) associé à une perturbation théorique d'intensité donnée, comparer lesdites charges théoriques déterminées (C1 à Cn), associées audit couple, au seuil de charges prédéfini (T), de sorte que ledit domaine de dépassement de charges (Dd) est déterminé par l'ensemble des couples dudit domaine de vol (Dv) pour lesquels lesdites charges théoriques déterminées (C1 à Cn) associées sont au moins égales audit seuil de charges (T); et
- les moyens (4, 5, 10, A1, A2, B1, B2) suivants qui mettent en oeuvre de façon répétitive les opérations correspondantes :
▪ des moyens (4) pour réaliser une surveillance permettant de détecter que ledit avion (AC) se trouve dans ledit domaine de dépassement de charges (Dd) ;
▪ des moyens (5, 10) pour déterminer, lorsque ledit avion (AC) se trouve dans ledit domaine de dépassement de charges (Dd), des ordres de braquage d'au moins certaines desdites surfaces de contrôle (S1, S2, P1, P2) pour réduire les charges appliquées sur ledit avion (AC), ces ordres de braquage étant tels qu'ils engendrent un braquage desdites surfaces de contrôle (S1, S2, P1, P2) respectivement selon un angle de braquage particulier ; et
▪ des moyens (A1, A2, B1, B2) pour appliquer lesdits ordres de braquage auxdites surfaces de contrôle (S1, S2, P1, P2).

8. Avion,
**caractérisé en ce qu'**il comporte un dispositif (1) tel que spécifié sous la revendication 7.

## Patentansprüche

1. Verfahren zur Reduzierung der tatsächlichen Lasten, die auf ein Flugzeug (AC) bei einer aerodynamischen Störung einwirken, wobei das Flugzeug (AC) Steuerflächen (S1, S2, P1, P2) aufweist, die an seinen Tragflächen (W1, W2) angeordnet sind, wobei gemäß diesem Verfahren:
A/ in einem vorausgehenden Schritt ein Bereich der Lastüberschreitung (Dd) bestimmt wird, der durch Paare von Höhen- und Geschwindigkeitswerten definiert ist, die für das Flugzeug (AC) erreichbar sind, und für den die auf das Flugzeug (AC) einwirkenden tatsächlichen Lasten wenigstens gleich einem vordefinierten Lastschwellenwert (T) sein können, welcher gleich einem vorbestimmten Prozentsatz der tatsächlichen Bemessungslasten der Tragflächen (W1, W2) des Flugzeugs (AC) ist, indem automatisch die folgenden aufeinander folgenden Schritte ausgeführt werden:
a) es wird wenigstens ein Parameter des Flugzeugs (AC) ausgewählt, dessen Wert sich im Laufe eines Fluges des Flugzeugs (AC) ändern kann;
b) für wenigstens einen gegebenen Wert des ausgewählten Parameters werden auf das Flugzeug (AC) einwirkende theoretische Lasten (C1 bis Cn) für alle Paare eines Flugbereichs (Dv) bestimmt, denen jeweils theoretische aerodynamische Störungen von gegebener Intensität zugeordnet sind, wobei der Flugbereich (Dv) des Flugzeugs (AC) durch Paare von Höhen- und Geschwindigkeitswerten definiert ist, die für das Flugzeug (AC) erreichbar sind; und
c) für jedes Paar des Flugbereichs (Dv), das einer theoretischen Störung von gegebener Intensität zugeordnet ist, werden die bestimmten theoretischen Lasten (C1 bis Cn), die dem Paar zugeordnet sind, mit dem vordefinierten Lastschwellenwert (T) verglichen, so dass der Bereich der Lastüberschreitung (Dd) durch die Menge der Paare des Flugbereichs (Dv) bestimmt ist, für welche die zugeordneten bestimmten theoretischen Lasten (C1 bis Cn) wenigstens gleich dem Lastschwellenwert (T) sind;
B/ während eines Fluges des Flugzeugs (AC) wiederholt und automatisch die folgenden Schritte ausgeführt werden:
i) es wird eine Überwachung der momentanen Höhe und der momentanen Geschwindigkeit des Flugzeugs (AC) durchgeführt, um zu erkennen, ob sich das Letztere in dem Bereich der Lastüberschreitung (Dd) befindet;
ii) wenn sich das Flugzeug (AC) in dem Bereich der Lastüberschreitung (Dd) befindet, werden Ausschlagbefehle für wenigstens einige der Steuerflächen (S1, S2, P1, P2) bestimmt, um die auf das Flugzeug (AC) einwirkenden tatsächlichen Lasten zu reduzieren, wobei diese Ausschlagbefehle so beschaffen sind, dass sie einen Ausschlag der Steuerflächen (S1, S2, P1, P2) jeweils um einen speziellen Ausschlagwinkel bewirken; und
iii) die so bestimmten Ausschlagbefehle werden auf die Steuerflächen (S1, S2, P1, P2) angewendet.

2. Verfahren nach Anspruch 1, **gekennzeichnet:**
- **dadurch, dass** der Schritt b) für mehrere gegebene Werte des ausgewählten Parameters wiederholt wird; und
- dadurch, dass im Schritt c) für jeden der gegebenen Werte des ausgewählten Parameters und für jedes Paar des Flugbereichs (Dv) die bestimmten theoretischen Lasten (C1 bis Cn), die dem Paar zugeordnet sind, mit dem vordefinierten Lastschwellenwert (T) verglichen werden, so dass man für jeden der Werte des ausgewählten Parameters einen solchen Bereich der Lastüberschreitung (Dd) erhält, der durch die Menge der Paare des Flugbereichs (Dv) bestimmt ist, deren zugeordnete bestimmte theoretische Lasten (C1 bis Cn) wenigstens gleich dem Lastschwellenwert (T) sind; und
- dadurch, dass in Abhängigkeit von einem Leistungskriterium des Flugzeugs (AC) unter den bestimmten Bereichen der Lastüberschreitung (Dd) ein optimaler Bereich der Lastüberschreitung ausgewählt wird.

3. Verfahren nach einem der Ansprüche 1 oder 2,
**dadurch gekennzeichnet, dass** der ausgewählte Parameter des Flugzeugs (AC)zur folgenden Gruppe der Parameter des Flugzeugs (AC) gehört:
- Masse des Flugzeugs (AC);
- Füllstand der Treibstofftanks des Flugzeugs (AC);
- Zentrierung des Flugzeugs (AC).

4. Verfahren nach einem der Ansprüche 1 bis 3, **gekennzeichnet:**
- **dadurch, dass** die Steuerflächen Landeklappen (S1, S2) sind, welche am inneren Teil der Tragflächen (W1, W2) des Flugzeugs (AC) angeordnet sind; und
- dadurch, dass im Schritt iii) die Klappen (S1, S2) symmetrisch bezüglich der Längsachse (L-L) des Flugzeugs (AC) nach unten ausgefahren werden.

5. Verfahren nach einem der Ansprüche 1 bis 3, **gekennzeichnet:**
- **dadurch, dass** die Steuerflächen umfassen:
▪ innere Klappen (S1, S2), welche am inneren Teil der Tragflächen (W1, W2) des Flugzeugs (AC) angeordnet sind; und
▪äußere Klappen (P1, P2), welche am äußeren Teil der Tragflächen (W1, W2) des Flugzeugs (AC) angeordnet sind;
- und dadurch, dass im Schritt iii):
▪ die inneren Klappen (S1, S2) und die äußeren Klappen (P1, P2) unabhängig voneinander ausgefahren werden; und
▪ die inneren Klappen (S1, S2) und die äußeren Klappen (P1, P2) jeweils symmetrisch bezüglich der Längsachse (L-L) des Flugzeugs (AC) ausgefahren werden.

6. Verfahren nach einem der Ansprüche 1 bis 5,
**dadurch gekennzeichnet, dass** die Steuerflächen (S1, S2, P1, P2) wenigstens während einer vordefinierten Zeitdauer ausgeschlagen gehalten werden.

7. Vorrichtung zur Reduzierung der tatsächlichen Lasten, die auf ein Flugzeug (AC) bei einer aerodynamischen Störung einwirken, wobei das Flugzeug (AC) Steuerflächen (S1, S2, P1, P2) aufweist, die an seinen Tragflächen (W1, W2) angeordnet sind,
**dadurch gekennzeichnet, dass** sie umfasst:
- Mittel (3) zum Bestimmen eines Bereichs der Lastüberschreitung (Dd), der durch Paare von Höhen- und Geschwindigkeitswerten definiert ist, die für das Flugzeug (AC) erreichbar sind, und für den die auf das Flugzeug (AC) einwirkenden tatsächlichen Lasten wenigstens gleich einem vordefinierten Lastschwellenwert (T) sein können, welcher gleich einem vorbestimmten Prozentsatz der tatsächlichen Bemessungslasten der Tragflächen (W1, W2) ist, indem automatisch die folgenden aufeinander folgenden Schritte ausgeführt werden:
• Auswählen wenigstens eines Parameter des Flugzeugs (AC), dessen Wert sich im Laufe eines Fluges des Flugzeugs (AC) ändern kann;
• für wenigstens einen gegebenen Wert des ausgewählten Parameters, Bestimmen der auf das Flugzeug (AC) einwirkenden theoretischen Lasten (C1 bis Cn) für alle Paare eines Flugbereichs (Dv), denen jeweils theoretische aerodynamische Störungen von gegebener Intensität zugeordnet sind, wobei der Flugbereich (Dv) des Flugzeugs (AC) durch Paare von Höhen- und Geschwindigkeitswerten definiert ist, die für das Flugzeug (AC) erreichbar sind; und
• für jedes Paar des Flugbereichs (Dv), das einer theoretischen Störung von gegebener Intensität zugeordnet ist, Vergleichen der bestimmten theoretischen Lasten (C1 bis Cn), die dem Paar zugeordnet sind, mit dem vordefinierten Lastschwellenwert (T), so dass der Bereich der Lastüberschreitung (Dd) durch die Menge der Paare des Flugbereichs (Dv) bestimmt ist, für welche die zugeordneten bestimmten theoretischen Lasten (C1 bis Cn) wenigstens gleich dem Lastschwellenwert (T) sind; und
- die folgenden Mittel (4, 5, 10, A1, A2, B1, B2), welche die entsprechenden Vorgänge wiederholt ausführen:
• Mittel (4) zum Durchführen einer Überwachung, die es ermöglicht zu erkennen, ob sich das Flugzeug (AC) in dem Bereich der Lastüberschreitung (Dd) befindet;
• Mittel (5, 10) zum Bestimmen, wenn sich das Flugzeug (AC) in dem Bereich der Lastüberschreitung (Dd) befindet, von Ausschlagbefehlen für wenigstens einige der Steuerflächen (S1, S2, P1, P2), um die auf das Flugzeug (AC) einwirkenden tatsächlichen Lasten zu reduzieren, wobei diese Ausschlagbefehle so beschaffen sind, dass sie einen Ausschlag der Steuerflächen (S1, S2, P1, P2) jeweils um einen speziellen Ausschlagwinkel bewirken; und
• Mittel (A1, A2, B1, B2) zum Anwender der Ausschlagbefehle auf die Steuerflächen (S1, S2, P1, P2),

8. Flugzeug,
**dadurch gekennzeichnet, dass** es eine Vorrichtung (1) aufweist, wie in Anspruch 7 angegeben.

## Claims

1. A method for reducing actual loads generated on an airplane (AC) by an aerodynamic disturbance, said airplane (AC) comprising control surfaces (S1, S2, P1, P2) arranged on those wings (W1, W2), method according to which :
A/ in a preliminary step, a load exceeding envelope (Dd) is determined, defined by couples of values of altitude and speed available to said airplane (AC), for which the actual loads applied on said airplane (AC) are able to be at least equal to a predefined load threshold (T) that is equal to a predetermined percentage of actual dimensioning loads of the wings (W1, W2) of said airplane (AC), by performing automatically in step A/, the following successive steps :
a) at least one parameter of the airplane (AC) is selected having its value being able to vary during the flight of said airplane (AC);
b) for at least one given value of said selected parameter, theoretical loads (C1 to Cn) are determined, applied on the airplane (AC) for all couples of a flight envelope (Dv) with which theoretical aerodynamic disturbances of a given intensity are respectively associated, said flight envelope (Dv) of the airplane (AC) being defined by couples of altitude and speed values available to said airplane (AC); and
c) for each couple of said flight envelope (Dv) associated with a theoretical disturbance of a given intensity, said determined theoretical loads (C1 to Cn), associated with said couple, are compared to the predefined load threshold (T), so that said load exceeding envelope (Dd) is determined by the set of couples of said flight envelope (Dv) for which said associated determined theoretical loads (C1 to Cn) are at least equal to said load threshold (T);
B/ during a flight of the airplane (AC), the following steps are repeatedly and automatically performed:
i) a monitoring is achieved for the current altitude and speed of said airplane (AC) for detecting whether the latter flies in said load exceeding envelope (Dd);
ii) when said airplane (AC) flies in said load exceeding envelope (Dd), deflection orders are determined of at least some of said control surfaces (S1, S2, P1, P2) for reducing the actual loads applied on said airplane (AC), said deflection orders being such that they generate a deflection of said control surfaces (S1, S2, P1, P2) respectively according to a particular deflection angle; and
iii)the determined deflection orders are applied to said control surfaces.

2. The method according to claim 1,
**characterized:**
- **in that** step b) is repeated for a plurality of given values of said selected parameter; and
- **in that**, in step c), for each one of said given values of the selected parameter and for each couple of said flight envelope (Dv), said determined theoretical loads (C1 to Cn), associated with said couple, are compared to the predefined load threshold (T), so that, for each one of said values of the selected parameter, such a load exceeding envelope (Dd) is obtained, determined by the set of couples of said flight envelope (Dv) having said associated determined theoretical loads (C1 a Cn) being at least equal to said load threshold (T); and
- **in that** as a function of a performance criterion of the airplane (AC), an optimum load exceeding envelope is selected amongst said determined load exceeding envelopes (Dd).

3. The method according to one of claims 1 and 2, **characterized in that** said parameter of the selected airplane (AC) belongs to the following group of parameters of the airplane (AC):
- the mass of said airplane (AC);
- the filling level of the tanks of said airplane (AC);
- the centering of said airplane (AC).

4. The method according to any one of claims 1 to 3, **characterized:**
- **in that** said control surfaces are high lift flaps (S1, S2) being arranged on the internal part of the wings (W1, W2) of said airplane (AC); and
- **in that**, in step iii), said flaps (S1, S2) are deflected downwards symmetrically with respect to the longitudinal axis (L-L) of the airplane (AC).

5. The method according to any one of claims 1 to 3, **characterized:**
- **in that** said control surfaces comprise:
▪ internal flaps (S1, S2) being arranged on the internal part of the wings (W1, W2) of said airplane (AC); and
▪ external flaps (PI, P2) being arranged on the external part of the wings (W1, W2) of said airplane (AC);
- and **in that**, in step iii):
▪ said internal flaps (S1, S2) and said external flaps (P1, P2) are independently deflected; and
▪ said internal flaps (S1, S2) and said external flaps (P1, P2) are respectively deflected symmetrically with respect to the longitudinal axis (L-L) of the airplane (AC).

6. The method according to any one of claims 1 to 5, **characterized in that** said control surfaces (S1, S2, P1, P2) are maintained deflected at least during a predefined time delay.

7. A device for reducing actual loads generated on an airplane (AC) by an aerodynamic disturbance, said airplane (AC) comprising control surfaces (S1, S2, P1, P2) arranged on its wings (W1, W2),
**characterized in that** it comprises:
- means (3) for determining a load exceeding envelope (Dd) defined by couples of values of altitude and speed available to said airplane (AC), for which the actual loads applied on said airplane (AC) are able to be at least equal to a predefined load threshold (T) that is equal to a predetermined percentage of actual dimensioning loads of the wings (W1, W2), by performing automatically the following successive steps:
• at least one parameter of the airplane (AC) is selected having its value being able to vary during the flight of said airplane (AC);
• for at least one given value of said selected parameter, theoretical loads (C1 to Cn) are determined, applied on the airplane (AC) for all couples of a flight envelope (Dv) with which theoretical aerodynamic disturbances of a given intensity are respectively associated, said flight envelope (Dv) of the airplane (AC) being defined by couples of altitude and speed values available to said airplane (AC), and
• for each couple of said flight envelope (Dv) associated with a theoretical disturbance of a given intensity, said determined theoretical loads (C1 to Cn), associated with said couple, are compared to the predefined load threshold (T), so that said load exceeding envelope (Dd) is determined by the set of couples of said flight envelope (Dv) for which said associated determined theoretical loads (C1 to Cn) are at least equal to said load threshold (T); and
- the following means (4, 5, 10, A1, A2, B1, B2) implementing repeatedly the corresponding operations:
▪ means (4) for performing a monitoring allowing to detect that said airplane (AC) flies in said load exceeding envelope (Dd);
▪ means (5, 10) for determining, when said airplane (AC) flies in said load exceeding envelope (Dd), deflection orders of at least some of said control surfaces (S1, S2, P1, P2) for reducing the actual loads applied on said airplane (AC), said deflection orders being such that they generate a deflection of said control surfaces (S1, S2, P1, P2) respectively according to a particular deflection angle; and
▪ means (A1, A2, B1, B2) for applying said deflection orders to said control surfaces (S1, S2, P1, P2).

8. An airplane,
**characterized in that** it comprises a device (1) such as specified in claim 7.
